# EUROPÄISCHE PATENTSCHRIFT

(11) **EP 0 519 361 B1**
(45) Veröffentlichungstag und Bekanntmachung des Hinweises auf die Patenterteilung: **13.03.1996**
(21) Anmeldenummer: 92110003.8
(22) Anmeldetag: 13.06.1992
(51) Int. Cl.: G01S 13/93, G01S 13/92, G01S 13/84, G01S 13/82

(54) **Dauerstrich-Radargerät, zusätzlich als Sender für die Informationsübertragung verwendbar**
Continuous wave radar device, additionally usable as information transmitter
Dispositif de radar à onde continue, usable additionellement comme transmetteur d'informations

(30) Priorität: 21.06.1991 DE 4120479
(43) Veröffentlichungstag der Anmeldung: 23.12.1992
(73) Patentinhaber: Alcatel SEL Aktiengesellschaft, D-70435 Stuttgart (DE); ALCATEL N.V., NL-1077 XX Amsterdam (NL)
(72) Erfinder: Neininger, Günter, W-7140 Ludwigsburg (DE)
(74) Vertreter: Pechhold, Eberhard, Dipl.-Phys.

(56) Entgegenhaltungen:
- WO-A-88/04061
- DE-A- 2 808 544
- DE-B- 2 146 498
- FR-A- 2 444 383

## Beschreibung

Die Erfindung betrifft ein Dauerstrich-Radargerät, wie es z.B. als Rückstrahlortungsgerät auf einem Fahrzeug eingesetzt werden kann, um Entfernung und Relativgeschwindigkeit zu einem vorausliegenden Ziel zu messen. Ein solches Dauerstrich-Radargerät ist z.B. in der DE-PS 25 14 868, eine verbesserte Ausführung in der DE-PS 29 00 825 beschrieben.

Nachdem derartige Dauerstrich-Radargeräte zur Verwendung in Kraftfahrzeugen bestimmt sind und, wie intensive Tests gezeigt haben, durchaus geeignet sind, Auffahrunfälle (z.B. bei schlechter Sicht) zu verhindern, wäre es von Vorteil, wenn möglichst bald möglichst viele Kraftfahrzeuge mit derartigen Geräten ausgestattet wären. Einer schnellen Verbreitung solcher Geräte stehen jedoch durch deren aufwendige Technik bedingte, hohe Anschaffungskosten entgegen. Ein zusätzlicher Anreiz zur Anschaffung eines solchen Dauerstrich-Radargerätes könnte geschaffen werden, wenn dessen Nutzen durch eine zusätzliche Verwendungsmöglichkeit für einen anderen Zweck erhöht und dadurch das Kosten-Nutzen-Verhältnis verbessert werden könnte.

Es ist deshalb Aufgabe der Erfindung, eine solche Verwendungsmöglichkeit zu finden und ein bekanntes, gemäß dem Oberbegriff des Patentanspruchs 1 ausgebildetes Dauerstrich-Radargerät mit wenig Aufwand derart zu ergänzen, daß es diese zusätzliche Verwendungsmöglichkeit aufweist.

Diese Aufgabe wird durch die im kennzeichnenden Teil des Patentanspruchs 1 angegebenen Merkmale gelöst. Ein gemäß Patentanspruch 1 ausgestaltetes Dauerstrich-Radargerät ist in der Lage, ein zu übertragendes Nutzsignal in Abstrahlrichtung des Radar-Sendesignals auszusenden. Die Aussendung des Nutzsignals erfolgt dabei während der Rückflanke eines zur sägezahnförmigen Frequenzmodulation von der ersten Modulationseinrichtung benötigten Steuersignals, während eines Zeitintervalles, in dem beim bekannten Dauerstrich-Radargerät das Empfangssignal meist ausgetastet wird. Insofern besteht eine gewisse Ähnlichkeit zur bekannten Nutzung der Austastlücke des Videosignals zur Übertragung von Videotext-Information beim Fernsehen.

Um eine exakte Synchronisation zwischen dem für Radar-Funktionen genutzten Teil des Radar-Sendesignals und dessen zur Aussendung von Nutzinformation während des Sägezahn-Rücklaufs benutzten Teil sicherzustellen, wird, entsprechend Patentanspruch 2, zweckmäßig ein gemeinsamer Taktgeber für beide Modulationseinrichtungen benutzt.

Das Nutzsignal kann gemäß in den Ansprüchen 3 und 4 angegebenen Ausgestaltungen der Erfindung nach verschiedenen Arten moduliert sein und Sprache, Daten oder Steuerbefehle beinhalten. Mittels Aussenden von Sprachinformation lassen sich - die entsprechenden einfachen Empfänger vorausgesetzt - Mitteilungen zu festen Einrichtungen oder zu vorausfahrenden Fahrzeugen übertragen. Datenaussendung kann der Verkehrserfassung oder der Realisierung eines sogenannten "elektronischen Nummernschildes" dienen, und die Abgabe von codierten und damit störungssicheren Steuersignalen kann z.B. zur Steuerung von Garagentoren oder zur Beeinflussung von "intelligenten" Verkehrssignalanlagen verwendet werden.

Wird das Dauerstrich-Radargerät nach der Erfindung, wie im Patentanspruch 5 angegeben, zusätzlich mit einer Demodulationseinrichtung ausgestattet, so ist es in der Lage, von anderen sendenden Radargeräten Nutzsignale zu empfangen. Damit würde eine direkte Kommunikation der Fahrer sich begegnender Fahrzeuge möglich, ohne daß hierfür gesondert Funkgeräte zur Verfügung stehen müssten. Bei Anordnung einer einfachen Zusatz-Empfangsantenne an der Fahrzeugrückseite ergäbe sich für die Fahrer hintereinander fahrender Fahrzeuge die Möglichkeit, Mitteilungen an das jeweils vorausfahrende Fahrzeug abzugeben oder Mitteilungen von einem hinterherfahrenden Fahrzeug entgegenzunehmen. Der nebengeordnete Anspruch 6 ist ganz allgemein auf die Verwendung eines sägezahnförmig oder dreieckförmig frequenzmodulierten Dauerstrich-Radargerätes zur Informationsübermittlung gerichtet.

Anhand von mehreren Figuren soll nun ein Ausführungsbeispiel des Dauerstrich-Radargerätes nach der Erfindung beschrieben und seine Funktion erklärt werden.
- Fig. 1: zeigt
in a) Sende- und Empfangssignal eines bekannten, sägezahnförmig frequenzmodulierten Dauerstrich-Radargerätes,
in b) den Verlauf der Differenzfrequenz zwischen abgestrahltem und rückgestrahltem Signal und
in c) die Amplitude der Differenzfrequenz und des Nutzsignals.
- Fig. 2: zeigt schematisch die erfindungswesentlichen Teile des Dauerstrich-Radargerätes nach der Erfindung.
- Fig. 3: zeigt die Anordnung eines (zusätzlichen) Nutzsignal-Empfangsteils in einem Dauerstrich-Radargerät.
- Fig. 4: zeigt verschiedene Modulationsarten des Nutzsignals.

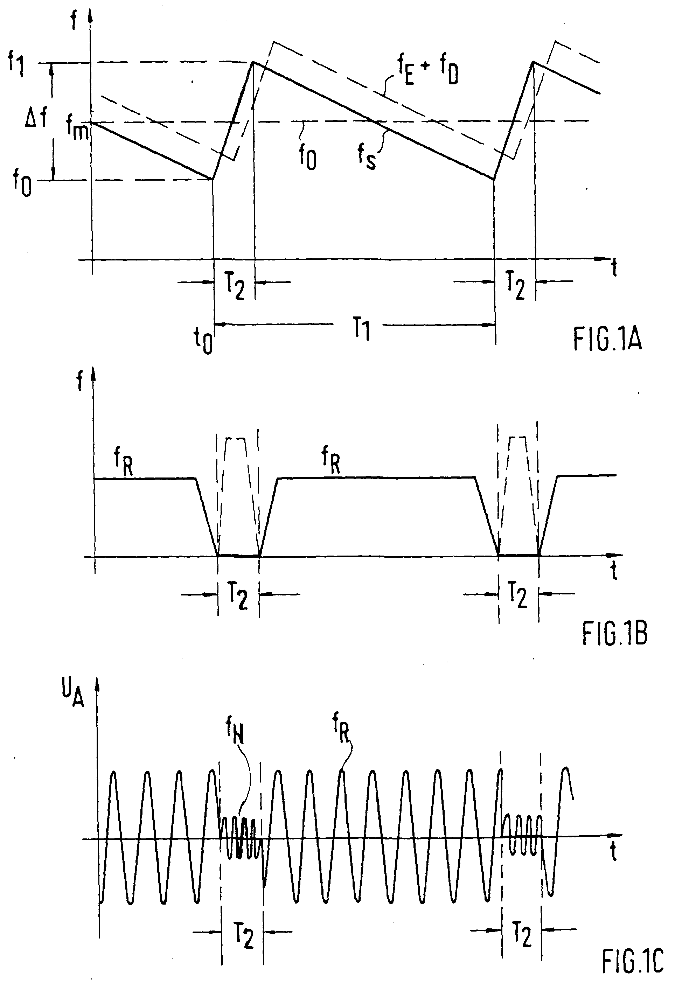

In Fig. 1a ist schematisch der Verlauf des Sendesignals eines bekannten, sägezahnförmig frequenzmodulierten Dauerstrich-Radargerätes in einem Frequenz/Zeit-Diagramm dargestellt. Ausgehend von einem Zeitpunkt t₀ nimmt die Sendefrequenz fₛ rasch von einem Anfangswert f₀, um einen Frequenzhub Δf auf einen Maximalwert f₁ zu, um dann langsam, mit konstanter Änderungsgeschwindigkeit wieder auf den Anfangswert abzunehmen. Dieser Frequenzverlauf wiederholt sich mit der Periodendauer T₁. Der ansteigende Teil des Frequenzverlaufes hat eine Dauer T₂, die in der Regel kürzer ist als die Periodendauer T₁, z.B. nur 5 % von T₁ beträgt. Ein empfangenes, von einem in festem Abstand zum Sender befindlichen Ziel rückgestrahltes Signal hätte einen Frequenzverlauf f_{E}, der bis auf eine Zeitverschiebung mit dem Frequenzverlauf des Sendesignals übereinstimmen würde. In Fig. 1a ist ein Frequenzverlauf f_{E} + f_{D} dargestellt, der dem eines von einem relativ zum Radargerät bewegten Ziel rückgestrahlten Empfangssignals entspricht. Zu einer zeitlichen Verschiebung tritt hier noch eine Frequenzverschiebung aufgrund des Dopplereffektes auf. Diese Dopplerverschiebung wird bei dem o.g. bekannten Radargerät zur Messung der Relativgeschwindigkeit ausgewertet.

Ein im Bereich der steilen Flanke des Sägezahnes gemäß der Erfindung zusätzlich aufmoduliertes Nutzsignal ist in Fig. 1a und 1b nicht dargestellt.

In Fig. 1b ist der Verlauf einer Differenzfrequenz f_{R} dargestellt, welcher sich durch Subtraktion der Empfangsfrequenz von der Sendefrequenz ergibt. Während der Zeit T₂ auftretende Differenzfrequenzen sind wegen der schnellen Frequenzänderung des Sendesignals in diesem Bereich sehr viel hochfrequenter als die Differenzfrequenz im übrigen Bereich der Periode T₁ und werden, damit eine vorzeichenrichtige Auswertung der Geschwindigkeit sichergestellt ist, üblicherweise nicht ausgewertet.

Fig. 1c zeigt die Amplituden U_{A} der Differenzfrequenz f_{R} sowie einer während der Zeit T₂ auftretenden Nutzsignalfrequenz f_{N}, die durch Modulation des Radar-Sendesignals in der Zeit T₂ während des Sägezahn-Rücklaufes erzeugt wird. Das für die Geschwindigkeitsmessung benötigte Differenzfrequenzsignal f_{R} und das in der Zeit T₂ zur Informationsübertragung verwendbare Nutzsignal f_{N} stören einander nicht.

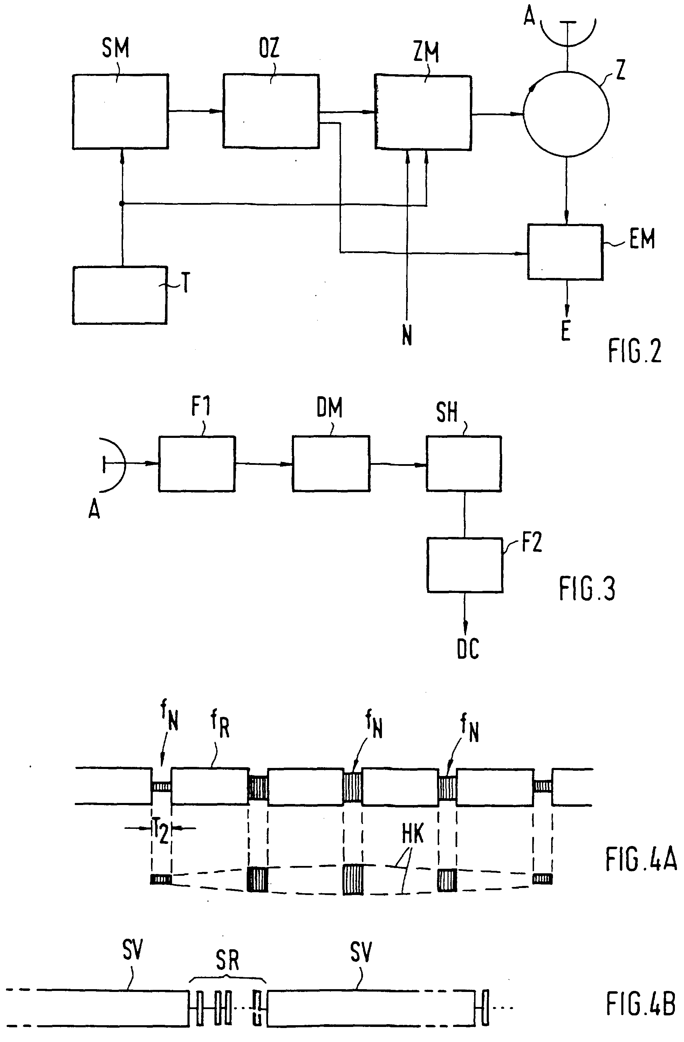

In Fig. 2 ist ein bekanntes, sägezahnförmig frequenzmoduliertes Radargerät wiedergegeben, das zur Ausgabe eines zusätzlichen Nutzsignals ausgebildet ist. Ein von einem Sägezahn-Modulator SM gesteuerter Sende-Oszillator OZ arbeitet über einen Zusatzmodulator ZM, dem das Nutzsignal N zugeführt wird, auf einen Zirkulator Z. Mit diesem ist einerseits eine Radar-Sende- und Empfangsantenne A, andererseits, für die Empfangsrichtung, ein Eingangs-Mischer EM verbunden, der durch Mischung eines von der Antenne aufgenommenen Empfangssignales mit der Frequenz des Sendesignals ein Empfangssignal E erzeugt, welches das in Fig. 1b dargestellte, zur Entfernungs- und Geschwindigkeitsmessung benötigte Referenzsignal f_{R} enthält. Auch das dem Radar-Sendesignal durch den Zusatzmodulator ZM aufgeprägte zusätzliche Nutzsignal ist im Eingangssignal E enthalten, kann aber, da es nur während des Sägezahn-Rücklaufes auftritt und außerdem eine von der Frequenz des Referenzsignals abweichende Frequenz aufweist, leicht vom Referenzsignal abgetrennt werden. Eine exakte Synchronisation des Zusatzmodulators mit dem Sägezahn-Modulator wird dadurch erreicht, daß für beide Modulatoren derselbe Taktgeber T verwendet wird. Als Zusatzmodulator kann z.B. ein PIN-Dioden-Dämpfungsglied Verwendung finden.

In Fig. 3 ist das Prinzip eines Empfängers für das zusätzliche Nutzsignal N wiedergegeben. Von einer Antenne A, die sowohl eine Radar-Sende- und Empfangsantenne als auch eine einfache Empfangsantenne ohne Sendefunktion sein kann, gelangt das Empfangssignal über ein erstes Filter F₁ in einen Demodulator DM, in dem die Radar-HF gleichgerichtet wird. Das Nutzsignal wird entsprechend der Modulationsart weiterverarbeitet, z.B. über eine Abtast- und Halteschaltung SH und ein weiteres Filter F₂ zur Abtrennung der Sägezahnfrequenz einer nicht dargestellten Decodierschaltung DC zugeführt, wo es ausgewertet wird.

Als Modulationsarten (für das Nutzsignal) kommen vor allem die in Fig. 4 schematisch wiedergegebene Puls-Amplituden-Modulation (Fig. 4a) und die Puls-Code-Modulation (Fig. 4b) in Frage. Bei der Puls-Amplituden-Modulation ändert sich die Amplitude der Nutzfrequenz f_{N} von Sägezahn-Rücklauf zu Sägezahn-Rücklauf. Während eines einzelnen Sägezahn-Rücklaufes (Zeit T₂), der als einzelner Puls ausgewertet wird, bleibt sie konstant. Die Differenzfrequenz f_{R} tritt nur außerhalb der Sägezahn-Rücklaufzeiten auf. Die zusätzliche Nutzinformation ist in der Hüllkurve HK der Pulsfolge der Sägezahn-Rückläufe enthalten. Die Puls-Wiederholfrequenz liegt bei heute verfügbaren, sägezahnförmig modulierten Radargeräten mit Radar-Sendefrequenzen im Bereich 80 GHz, bei ca. 50 kHz.

Bei Verwendung von Puls-Code-Modulation ist es zweckmäßig - ausreichende Breite der Sägezahn-Rücklauf-Phasen vorausgesetzt - diese Rücklaufphasen mit Subpulsen zu modulieren, so daß z.B. pro Sägezahn-Rücklauf ein Puls-Codewort übertragen wird.

Neben den genannten Modulationsarten sind prinzipiell auch beliebige andere Modulationsarten verwendbar. Soll das Nutzsignal z.B. der Übertragung von Daten oder Steuerungsinformationen dienen, kann Frequenzmodulation, die eine einfache Datenübertragung mittels Frequenzumtastung zuläßt, zweckmäßig sein.

## Patentansprüche

1. Dauerstrich-Radargerät mit einer ersten Modulationseinrichtung (SM), welche eine sägezahnförmige oder dreieckförmige Frequenzmodulation eines abzustrahlenden Radar-Sendesignals (fₛ) bewirkt, und mit einem Empfangsteil, der ein von einem Ziel zurückgestrahltes Empfangssignal (f_{E} + f_{D}) empfängt und im Bereich der flach verlaufenden Flanke des Sägezahnes bzw. einer der Flanken des Dreiecks auswertet,
**dadurch gekennzeichnet,** daß eine zusätzliche Modulationseinrichtung (ZM) vorgesehen ist, die das Radar-Sendesignal (fₛ) während der steilen Flanke (T₂) des Sägezahns (Sägezahn-Rücklauf) bzw. während der Flanke des Dreiecks, während der das Empfangssignal nicht ausgewertet wird,mit einem Nutzsignal (N) moduliert.

2. Dauerstrich-Radargerät nach Anspruch 1, dadurch gekennzeichnet, daß die zusätzliche Modulationseinrichtung (ZM) durch denselben Taktgeber (T) gesteuert wird wie die erste Modulationseinrichtung (SM).

3. Dauerstrich-Radargerät nach Anspruch 1 oder 2, dadurch gekennzeichnet, daß das Nutzsignal in der zusätzlichen Modulationseinrichtung eine Puls-Amplitudenmodulation oder Puls-Code-Modulation des Radar-Sendesignals bewirkt.

4. Dauerstrich-Radargerät nach Anspruch 1 oder 2, dadurch gekennzeichnet, daß das Nutzsignal eine Frequenzmodulation, insbesondere eine Frequenzumtastung des Radar-Sendesignals bewirkt.

5. Dauerstrich-Radargerät nach einem der vorstehenden Ansprüche, dadurch gekennzeichnet, daß sein Empfangsteil neben einer Auswerteeinrichtung für Radar-Empfangssignale eine Demodulationseinrichtung (DM) enthält, die ein mit einem Radar-Empfangssignal empfangenes, diesem während des Sägezahn-Rücklaufes aufmoduliertes Nutzsignal demoduliert.

6. Verwendung eines sägezahnförmig frequenzmodulierten Dauerstrich-Radargerätes nach einem der Ansprüche 1...5 zur Informationsübertragung.

## Claims

1. A continuous-wave radar set comprising a first modulator (SM) and a receiver portion, said first modulator (SM) producing a sawtooth or triangular frequency modulation of an outgoing radar signal (fₛ), and said receiver portion receiving an echo signal (f_{E} + f_{D}) from a target and evaluating said echo signal in the gradually falling edge portion of the sawtooth waveform or in one of the edge portions of the triangular waveform,
**characterized in** that an additional modulator (ZM) is provided which modulates the outgoing radar signal (fₛ) with a useful signal (N) during the sharply rising edge portion (T₂) of the sawtooth waveform (flyback) or during that edge portion of the triangular waveform in which the echo signal is not evaluated.

2. A continuous-wave radar set as claimed in claim 1, characterized in that the additional modulator (ZM) is controlled by the same clock generator (T) as the first modulator (SM).

3. A continuous-wave radar set as claimed in claim 1 or 2, characterized in that in the additional modulator, the useful signal causes a pulse-amplitude modulation or pulse-code modulation of the outgoing radar signal.

4. A continuous-wave radar set as claimed in claim 1 or 2, characterized in that the useful signal causes a frequency modulation, particularly frequency-shift keying modulation, of the outgoing radar signal.

5. A continuous-wave radar set as claimed in any one of the preceding claims, characterized in that its receiver portion includes, besides a device for evaluating echo signals, a demodulator (DM) which removes a useful signal modulated onto an outgoing radar signal during the flyback period from a received echo signal.

6. Use of a sawtooth-modulated continuous-wave radar set as claimed in any one of claims 1 to 5 for information transmission.

## Revendications

1. Appareil radar à ondes entretenues comportant un premier dispositif de modulation (SM) qui effectue une modulation de fréquence en dents de scie ou triangulaire d'un signal d'émission radar (f_{S}) à envoyer, et comportant un élément de réception qui reçoit un signal de réception (f_{E} + f_{D}) réfléchi par un objet, et l'exploite dans la zone du flanc à tracé plat de la dent et/ou d'un des flancs du triangle,
caractérisé en ce qu'est prévu un dispositif de modulation supplémentaire (ZM), qui module le signal d'émission radar (fs) à l'aide d'un signal utile (N) pendant le flanc en pente raide (T₂) de la dent de scie (retour en dents de scie) et/ou pendant le flanc du triangle pendant lequel le signal de réception n'est pas exploité.

2. Appareil radar à ondes entretenues selon la revendication 1, caractérisé en ce que le dispositif de modulation supplémentaire (ZM) est commandé par le même synchroniseur (T) que le premier dispositif de modulation (SM).

3. Appareil radar à ondes entretenues selon les revendications 1 ou 2, caractérisé en ce que le signal utile effectue dans le dispositif de modulation supplémentaire une modulation d'impulsions en amplitude ou une modulation d'impulsions codées du signal d'émission radar.

4. Appareil radar à ondes entretenues selon les revendications 1 ou 2, caractérisé en ce que le signal utile effectue une modulation de fréquence, en particulier un déplacement de fréquence du signal d'émission radar.

5. Appareil radar à ondes entretenues selon l'une des revendications précédentes, caractérisé en ce que son élément de réception comprend, outre un dispositif d'exploitation pour les signaux de réception radar, un dispositif de démodulation (DM) qui, à l'aide d'un signal de réception radar, démodule un signal utile reçu à l'aide d'un signal de réception radar et modulé pendant le retour en dents de scie.

6. Utilisation pour la transmission d'informations d'un appareil radar à ondes entretenues à modulation de fréquence en dents de scie selon l'une des revendications 1 à 5 .
